# EUROPÄISCHE PATENTANMELDUNG

(11) **EP 4 549 789 A1**
(43) Veröffentlichungstag der Anmeldung: **07.05.2025**
(21) Anmeldenummer: 24210241.6
(22) Anmeldetag: 31.10.2024
(51) Int. Cl.: F16K 27/00, F16K 31/00, F16K 31/02

(54) **VERFAHREN ZUR STEUERUNG EINER VENTILANORDNUNG, SOWIE VENTILANORDNUNG**

(30) Priorität: 03.11.2023 DE 102023130475; 17.05.2024 DE 102024113886
(71) Anmelder: Otto Egelhof GmbH & Co. KG, 70736 Fellbach (DE); Egelhof Regelungstechnik (Suzhou) Co., Ltd, Suzhou New District 215129 (CN)
(72) Erfinder: Sohn, Jürgen, 73732 Esslingen (DE)
(74) Vertreter: Mammel und Maser Patentanwälte PartG mbB

(57) **Zusammenfassung**

Die Erfindung betrifft ein Verfahren zur Steuerung einer Ventilanordnung (61), bei welchem ein Anschlussgehäuse (62) vorgesehen ist, wobei das Anschlussgehäuse (62) mehrere Anschlussöffnungen (63) aufweist, oder aus mehreren Modulen mit jeweils zumindest ei-ner Anschlussöffnung (63) gebildet ist, wobei die jeweilige An-schlussöffnung (63) sich zumindest zwischen einem Einlass (64) und zumindest einem Auslass (66) zumindest teilweise er-streckt, bei welchem in dem Anschlussgehäuse (62) zumindest zwei Ven-tile (11) angeordnet sind und jedes in der Anschlussöffnung (63) positionierte Ventil (11) für eine Öffnungs- und Schließbewegung mit einem Steuersignal von einer Steuerung (19) ange-steuert wird, wobei durch zumindest eine Steuerplatine (86) der Steuerung (19) eine Taktzeit des zumindest einen Ventils (11) für eine Öffnungs- und Schließbewegung der Ventile (11) angesteuert wird, (hierzu Fig. 12)

## Beschreibung

Die Erfindung betrifft ein Verfahren zur Steuerung einer Ventilanordnung, insbesondere für Regel- oder Abschaltventile, für flüssige oder gasförmige Medien sowie eine Ventilanordnung mit solchen Ventilen.

Aus der DE 10 2016 113 964 A1 ist ein Temperaturregelventil zur temperaturabhängigen Durchflussregelung eines Mediums bekannt. Dieses Temperaturregelventil umfasst ein Ventilgehäuse mit einem in dem Ventilgehäuse angeordneten Ventilschließglied, welches in einer Schließstellung einen Ventilsitz einer Durchlassöffnung im Ventilgehäuse schließt. Das Ventilschließglied ist mit einem Stellelement betätigbar, welches einem auf das Ventilschließglied wirkenden Kraftspeicherelement bei einer Stellbewegung entgegenwirkt. Das Ventilgehäuse weist eine zum Gehäuseinneren führende Einlassöffnung und eine von dem Gehäuseinneren abführende Auslassöffnung für einen Durchfluss eines Massenstromes des Mediums auf. In dem Gehäuseinneren ist ebenso das Stellelement vorgesehen. Das Stellelement steuert in Abhängigkeit der Temperatur des das Ventilgehäuse durchströmenden Mediums das Ventilschließglied an, sodass dieses in eine Arbeitsposition übergeführt wird, in der die Durchlassöffnung geschlossen ist.

Aus der DE 10 2014 105 100 A1 ist des Weiteren ein Ventil für ein gasförmiges oder flüssiges Medium bekannt. In einem Ventilgehäuse ist eine Einlassöffnung und eine Auslassöffnung vorgesehen, welche durch eine Durchgangsbohrung miteinander verbunden sind. Die Durchgangsbohrung umfasst einen Ventilsitz, der durch ein Ventilschließglied verschließbar ist. Zum Öffnen des Durchgangs wird ein Stellelement angesteuert, welches an dem Ventilschließglied angreift. Während der Öffnungsbewegung des Ventilschließgliedes wird eine Kraft entgegen eines Kraftspeicherelementes aufgebracht. Das Stellelement besteht aus einem Drahtelement, insbesondere aus einer Formgedächtnislegierung, welches durch eine Bestromung aktivierbar ist. Sowohl das Ventilschließglied, das Kraftspeicherelement als auch das Stellelement sind innerhalb eines Regulierraumes des Ventilgehäuses vorgesehen, welchen das Medium durchströmt.

Der Erfindung liegt die Aufgabe zugrunde, ein Verfahren zur Steuerung einer Ventilanordnung sowie eine Ventilanordnung für flüssige oder gasförmige Medien vorzuschlagen, wobei die Ventilanordnung mit einer geringen elektrischen Leistung ansteuerbar ist.

Diese Aufgabe wird durch ein Verfahren zur Steuerung einer Ventilanordnung gelöst, bei welchem in dem Anschlussgehäuse zumindest zwei Ventile angeordnet sind und jedes in der Anschlussöffnung positionierte Ventil für eine Öffnungs- und Schließbewegung mit einem Steuersignal von einer Steuerung angesteuert wird, wobei durch zumindest eine Steuerplatine der Steuerung eine Taktzeit des zumindest einen Ventils für eine Öffnungs- und Schließbewegung angesteuert wird. Dies ermöglicht, dass die in dem Anschlussgehäuse angeordneten Ventile nur über eine bestimmte Zeitdauer angesteuert werden. Dies ermöglicht eine Reduzierung der erforderlichen Leistung für die Ansteuerung, wodurch eine Energieeinsparung erzielt wird.

Bevorzugt ist vorgesehen, dass durch die zumindest eine Steuerplatine eine Reihenfolge der Ventile für eine Öffnungs- und Schließbewegung ausgewählt und angesteuert wird. Dadurch kann beispielsweise ein einzelner Kreislauf, welcher durch das Ventil angesteuert wird, mit einer erhöhteren Frequenz geöffnet und geschlossen werden, als der benachbarte Kreislauf, da bei diesem Kreislauf beispielsweise ein erhöhter Durchfluss des Kältemittels zum Heizen oder Kühlen erforderlich ist.

Vorteilhafterweise kann vorgesehen sein, dass die Ansteuerung der Ventile einzeln oder in Gruppen erfolgt. Bevor ein weiteres Ventil oder eine weitere Gruppe von Ventilen mit einer Steuerungsspannung beaufschlagt wird, wird die zuvor angelegte Steuerspannung auf Null gesetzt.

Insbesondere kann das in der Anschlussöffnung des Anschlussgehäuses eingesetzte Ventil codiert werden und die Zuordnung in der Steuerplatine abgespeichert werden. Somit können die Ventile zunächst wahlweise in das Anschlussgehäuse eingesetzt werden und darauffolgend kann eine Zuordnung für die nachfolgende Steuerung erfolgen.

Die Steuerplatine erhält bevorzugt ein Steuersignal von einer Regeleinrichtung. Diese Regeleinrichtung kann ein Raumtemperaturregler sein. Solche Raumtemperaturregler werden zumeist mit einer Spannung von 230 Volt oder 24 Volt angesteuert. Dieses Steuersignal wird bevorzugt auf eine Steuerspannung zur Ansteuerung des jeweiligen Ventils reduziert. Hierfür ist bevorzugt ein Spannungswandler oder Transformator vorgesehen. Dieser kann beispielsweise die Eingangsspannung von 230 V oder 24 V auf 2V oder weniger reduzieren.

Gemäß einer Ausführungsform des Verfahrens kann vorgesehen sein , dass jedes Steuerventil durch eine mit der Steuerung verbundene Steuerleitung angesteuert wird. Sofern nur eine Öffnungs- und Schließbewegung des jeweiligen Ventils anzusteuern ist, kann eine zweiadrige Steuerleitung eingesetzt werden. Sofern das Steuerventil eine Lage- oder Positionserkennung, insbesondere einem Hallsensor, für das Ventilelement umfasst, kann beispielsweise eine 5-adrige Steuerleitung eingesetzt werden, sodass der Sensor für die Lage- und Positionserkennung mit einer Spannung versorgt wird und zusätzlich ein entsprechendes Meßsignal an die Steuerplatine übermitteln kann. Gemäß einer weiteren Ausführungsform des Verfahrens kann auch eine kabellose Ansteuerung erfolgen.

Des Weiteren ist bevorzugt vorgesehen, dass das Ventil in einem Ventilgehäuse ein Ventilelement aufweist, welches mit zumindest einem Stellelement aus einer Formgedächtnislegierung angesteuert wird. Bei solchen Stellelementen mit einer Formgedächtnislegierung kann eine Steuerspannung von 2 Volt oder weniger genügen. Dadurch wird eine energiesparende Ansteuerung ermöglicht. Der Einsatz der Ventile weist des Weiteren den Vorteil auf, dass durch die Hystereseeigenschaften der Formgedächtnislegierung das Stellelement nach dem Abschalten der Steuerspannung einen Zeitraum benötigt, bis das Ventilelement wieder in eine Schließposition übergeführt ist. Somit kann während dieser Zeitdauer ein anderes Ventil mit einer Öffnungsbewegung taktweise angesteuert werden. Durch den Nachlauf des zuvor angesteuerten Ventils kann dennoch der Kreislauf mit einem Volumenstrom des Kühlmittels versorgt werden. Dies kann auch ermöglichen, dass zwei oder mehrere Kreisläufe mit dem Kältemittel gleichzeitig versorgt werden können, obwohl nur ein Ventil mit einer Steuerspannung aktiv angesteuert ist.

Die der Erfindung zugrunde liegende Aufgabe wird des Weiteren durch eine Ventilanordnung mit einem Anschlussgehäuse gelöst, wobei in dem Anschlussgehäuse zumindest zwei Ventile angeordnet sind und jedes in der Anschlussöffnungs- und Schließbewegung mit einem Steuersignal von einer Steuerung ansteuerbar ist, wobei durch zumindest eine Steuerplatine der Steuerung eine Taktzeit des zumindest einen Ventils für eine Öffnungs- und Schließbewegung der Ventile angesteuert ist. Dadurch kann ein einfacher Aufbau und eine kostengünstige Ansteuerung der Ventilanordnung mit mehreren Ventilen in einem Anschlussgehäuse ermöglicht sein. Das Anschlussgehäuse kann beispielsweise als ein Ventilblock für eine Fußbodenheizung eingesetzt werden.

Vorteilhafterweise ist vorgesehen, dass die Steuerplatine eine Reihenfolge der Ventile für eine Öffnungs- und Schließbewegung auswählt und aufeinanderfolgend ansteuert. Dabei werden Eingangssignale von Regeleinrichtungen verarbeitet, sodass die jeweiligen dazugehörigen Ventile für die jeweiligen Kältemittelkreisläufe entsprechend ansteuerbar sind.

Bevorzugt weist diese Steuerplatine einen Spannungswandler auf, welcher eine Eingangsspannung von einer Regeleinrichtung auf eine Steuerspannung für die Ventile reduziert.

Insbesondere werden für diese Ventilanordnung Ventile verwendet, bei denen das Stellelement aus einer Formgedächtnislegierung ausgebildet ist. Alternativ können auch Ventile eingesetzt werden, welche beispielsweise mit einem Wachsdehnelement zur Ansteuerung des Ventilelementes arbeiten.

Die Ventile werden bevorzugt jeweils mit einer Steuerleitung mit der Steuerplatine der Steuerung verbunden. Alternativ kann auch eine kabellose Ansteuerung vorgesehen sein.

### SteuerungSteuerungSteuerungSteuerung

Des Weiteren ist bevorzugt vorgesehen, dass an einer Außenseite des Ventilgehäuses des Ventils eine umlaufende Nut vorgesehen ist, in welche ein Befestigungselement eingreift und das Ventil axial in der Anschlussöffnung zu dem Anschlussgehäuse sichert. Diese Anordnung weist den Vorteil auf, dass das Ventil unabhängig von einer radialen Ausrichtung in das Anschlussgehäuse einsetzbar und durch das seitlich daran angreifende Befestigungselement in dem Anschlussgehäuse fixierbar ist. Alternativ kann vorgesehen sein, dass der medienseitige Gehäuseabschnitt ein Außengewinde umfasst, welches in die Anschlussöffnung des Anschlussgehäuses einschraubbar ist. Bei beiden Alternativen kann eine schnelle Montage von einem solchen Ventil in dem Anschlussgehäuse ermöglicht sein.

Die Ventilanordnung kann gemäß einer ersten Ausführungsform ein Anschlussgehäuse aufweisen, welches einen Einlass, einen Auslass und einen Durchlass umfasst, die jeweils mit der Anschlussöffnung verbunden sind. Ein solches Anschlussgehäuse kann ein Einzelmodul darstellen, welches beispielsweise mit weiteren Anschlussgehäusen zu einem Verteiler verbindbar ist. Der Durchlass des einen Anschlussgehäuses ist mit dem Einlass des benachbarten Anschlussgehäuses verbindbar, sodass diese Einzelmodule aneinandergereiht werden können. Bevorzugt kann auch vorgesehen sein, dass die Auslassöffnung und der Auslass an dem Anschlussgehäuse als eine Einstecköffnung für ein darin einsetzbares Ventil ausgebildet sind.

Gemäß einer alternativen Ausführungsform der Ventilanordnung ist vorgesehen, dass das Anschlussgehäuse einen Einlass und einen Durchlass aufweist, wobei dazwischenliegend zumindest eine Anschlussöffnung vorgesehen ist, welches als eine Einstecköffnung sich durch das Anschlussgehäuse hindurch erstreckt. Ein solches Anschlussgehäuse bildet bevorzugt einen Verteiler, durch welchen mehrere Kreisläufe mit jeweils einem Ventil ansteuerbar sind. Insbesondere kann ein solcher Verteiler bei Fußbodenheizungen eingesetzt werden. Beispielsweise können sechs oder acht Ventile durch einen solchen Verteiler aufgenommen werden, d. h., dass sechs bzw. acht Kreisläufe separat ansteuerbar sind.

SteuerungSteuerungSteuerungDie Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine perspektivische Ansicht des Ventils,
- Figur 2: eine schematische Schnittansicht des Ventils gemäß Figur 1,
- Figur 3: eine perspektivische Ansicht auf eine Baugruppe des Ventils gemäß Figur 1,
- Figur 4: eine schematische Seitenansicht der Baugruppe gemäß Figur 3,
- Figur 5: eine schematische Schnittansicht einer alternativen Ausführungsform des Ventils zu Figur 2,
- Figur 6: eine schematische Schnittansicht einer weiteren alternativen Ausführungsform des Ventils zu Figur 2,
- Figur 7: eine schematische Schnittansicht einer alternativen Ausführungsform des Ventils gemäß Figur 2,
- Figur 8: eine schematische Ansicht einer Ventilanordnung bestehend aus einem Anschlussgehäuse und einem Ventil gemäß Figur 1,
- Figur 9: eine schematische Seitenansicht alternativen Ausführungsform des Ventils zu Figur 2,
- Figur 10: eine schematische Seitenansicht eines Anschlussgehäuses für ein Ventil gemäß Figur 9,
- Figur 11: eine schematische Seitenansicht einer weiteren alternativen Ausführungsform des Ventils zu Figur 9,
- Figur 12: eine schematische Seitenansicht eines Anschlussgehäuses mit mehreren Ventilen gemäß Figur 11.
- Figur 13: eine schematische Schnittansicht einer alternativen Ausführungsform zu Figur 5, und
- Figur 14: eine schematische Ansicht einer Ventilanordnung bestehend aus einem Anschlussgehäuse und einem Ventil gemäß Figur 13.

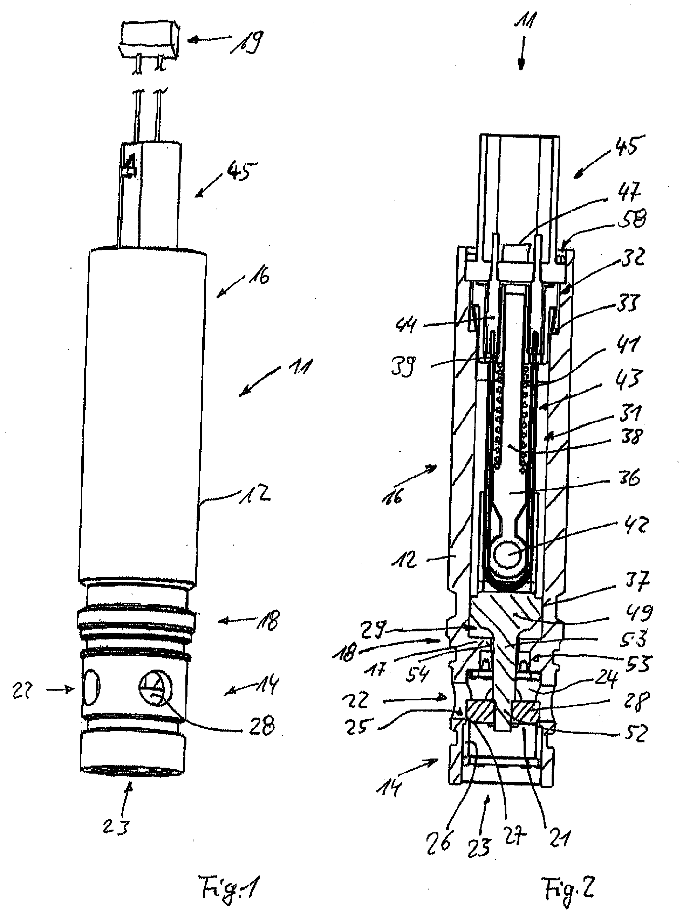

In Figur 1 ist eine perspektivische Ansicht eines Ventils 11 dargestellt. Dieses Ventil 11 ermöglicht die Steuerung einer Durchflussmenge von flüssigen oder gasförmigen Medien. Dieses Ventil 11 kann als ein Regel- oder Abschaltventil angesteuert werden. Insbesondere wird ein solches Ventil 11 für Fußbodenheizungen verwendet. Als flüssiges Medium wird bei Fußbodenheizungen Wasser eingesetzt, welches auf bis zu ca. 40 °C aufgeheizt wird. Auch kann das Ventil 11 für Heizkörper in Gebäuden eingesetzt werden, die beispielsweise mit Wasser gespeist werden, welches bis auf ca. 60 °C aufgeheizt wird. Bevorzugt können Drücke des Mediums bis zu 8 bar oder 6 bar gesteuert werden. Dabei kann durch jedes Ventil 11 ein Heizkreis einer Fußbodenheizung oder ein Heizkörper individuell angesteuert werden.

In Figur 2 ist eine schematische Schnittansicht des Ventils 11 in Figur 1 dargestellt. Dieses Ventil 11 ist beispielsweise als ein NC-Ventil, (NC = normally closed) ausgebildet. Bei diesem Ventil 11 ist vorgesehen, dass dieses in einer Ausgangsposition geschlossen ist. Durch eine Aktivierung eines Antriebes wird dieses Ventil 11 geöffnet. Dieses Ventil 11 umfasst ein Ventilgehäuse 12. Das Ventilgehäuse 12 umfasst einen unteren Abschnitt, der einen medienseitigen Gehäuseabschnitt 14 bildet. Des Weiteren umfasst das Ventilgehäuse 12 einen oberen Abschnitt, der einen umgebungsseitigen Gehäuseabschnitt 16 bildet. Die beiden Gehäuseabschnitte 14, 16 bilden das Ventilgehäuse 12. Zwischen dem medienseitigen Gehäuseabschnitt 14 und dem umgebungsseitigen Gehäuseabschnitt 16 ist eine Schnittstelle 18 vorgesehen, welche die beiden Gehäuseabschnitte 14, 16 vorzugsweise mediendicht zueinander trennt. Der umgebungsseitige Gehäuseabschnitt 16 weist eine Stirnseite 17 auf. Diese Stirnseite 17 kann in der Schnittstelle 18 oder im Bereich der Schnittstelle 18 liegen. Diese Stirnseite 17 dient bevorzugt zur Trennung des Mediums vom seitlichen Gehäuseabschnitts 14 zum umgebungsseitigen Gehäuseabschnitt 16. Dadurch wird bevorzugt nur der medienseitige Gehäuseabschnitt 14 mit dem zu regelnden Medium durchströmt. Dieses gelangt nicht in den umgebungsseitigen Gehäuseabschnitt 16. Der umgebungsseitige Gehäuseabschnitt 16 ist außerhalb des Mediums und bevorzugt von einer Umgebungsluft in einem Raum, einem Steuerschrank oder dergleichen umgeben.

Der medienseitige Gehäuseabschnitt 14 umfasst einen Durchgang 21, der zumindest eine Einlassöffnung 22 mit zumindest einer Auslassöffnung 23 verbindet. Die Einlassöffnung 22 kann auch als Auslassöffnung dienen und die Auslassöffnung 23 kann auch als Einlassöffnung angesteuert werden. Zwischen der Einlassöffnung 22 und dem Durchgang 21 ist ein Regulierraum 24 gebildet. In dem Durchgang 21 ist bevorzugt eine Dichthülse 26 eingesetzt, welche eine Ventilsitzfläche 27 aufweist. Die Dichthülse 26 kann über die Auslassöffnung 23 in den medienseitigen Gehäuseabschnitt 16 eingesetzt werden. Beispielsweise kann diese eingeschraubt, eingepresst oder durch ein separates Befestigungselement, wie beispielsweise ein Sicherungsring in einer definierten Position zum Durchgang 21 positionierbar sein. Der Ventilsitzfläche 27 zugeordnet ist ein Dichtkonus 28 vorgesehen. Der Dichtkonus 28 weist zur Dichthülse 26 weisend eine Schließfläche auf, sodass beim Positionieren des Dichtkonus 28 auf der Dichthülse 26 diese Schließfläche an der Ventilsitzfläche 27 anliegt und der Durchgang geschlossen ist.

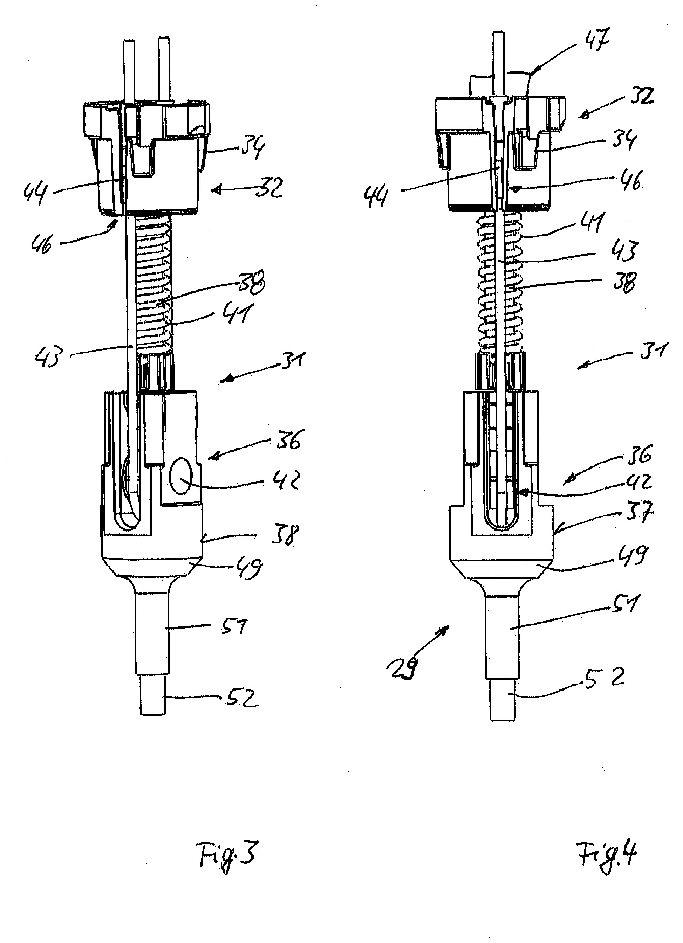

In dem umgebungsseitigen Gehäuseabschnitt 16 ist eine Baugruppe 31 eingesetzt. Diese Baugruppe 31 ist perspektivisch in Figur 3 und schematisch in einer Seitenansicht in Figur 4 dargestellt. Diese Baugruppe 31 ist als eine handhabbare Einheit ausgebildet, welche von einem stirnseitigen Ende in den umgebungsseitigen Gehäuseabschnitt 16 einsetzbar ist. Die Baugruppe 31 ist in eine der Schnittstelle 18 gegenüberliegenden Öffnung in das Ventilgehäuse 12 einsetzbar.

Die Baugruppe 31 umfasst eine Montagehülse 32. Diese Montagehülse 32 weist am äußeren Umfang Befestigungselemente 34 auf, durch welche die Baugruppe 31 nach dem Einsetzen in den umgebungsseitigen Gehäuseabschnitt 16 verriegelbar ist. Der Montagehülse 32 ist ein Führungsabschnitt 36 zugeordnet. Dieser Führungsabschnitt 36 ist relativ zur Montagehülse 32 verfahrbar. Der Führungsabschnitt 36 weist ein erstes Führungselement 37 auf, welcher entlang einer inneren Umfangswand des umgebungsseitigen Gehäuseabschnitts 16 verfahrbar geführt ist. Der Führungsabschnitt 36 weist des Weiteren ein zweites Führungselement 38 auf, welches sich entgegengesetzt zum ersten Führungselement 37 erstreckt. Das zweite Führungselement 38 ist stab- oder stiftförmig ausgebildet. Ein stirnseitiges Ende des zweiten Führungselementes 38 ist in einer Führungsbohrung 39 in der Montagehülse 32 geführt. Das erste Führungselement 37 und das zweite Führungselement 38 sind fest, vorzugsweise einteilig, an dem Führungsabschnitt 36 angeordnet. Zwischen dem ersten Führungselement 37 und der Montagehülse 32 ist ein Kraftspeicherelement 41 vorgesehen. Dieses Kraftspeicherelement 41 umgibt das zweite Führungselement 38. Dieses Kraftspeicherelement 41 ist vorgespannt zwischen dem Führungsabschnitt 36 und der Montagehülse 32 gehalten.

Innerhalb des Führungsabschnittes 36 ist eine Umlenkung 42 vorgesehen. Entlang dieser Umlenkung 42 wird das zumindest eine Stellelement 43 geführt. Ein jeweiliges Ende des Stellelementes 43 ist an der Montagehülse 32 fixiert gehalten. Vorteilhafterweise ist an jedem Ende des Stellelementes 43 ein Anschluss 45 für eine Steuerung 19 vorgesehen. Der Anschluss 45 kann als ein Stecker ausgebildet sein. Insbesondere ist eine Verkrimpung 44 vorgesehen. Diese Verkrimpung 44 ist fest an dem Ende des Stellelementes 43 angebracht. Das Stellelement 43 ist bevorzugt als Draht ausgebildet. Der Verkrimpung 44 ermöglicht, dass das Stellelement 43 durch einen seitlichen Schlitz 46 in die Montagehülse 32 eingeführt und die Verkrimpung 44 innerhalb der Montagehülse 32 fixiert gehalten werden kann. Das Stellelement 43 ist ausgehend von einem Ende durch die Verkrimpung 44 in der Montagehülse 32 gehalten und erstreckt sich von dort aus in Richtung auf die Umlenkung 42. Über diese Umlenkung 42 wird das Stellelement 43 wieder zurück zur Montagehülse 32 geführt und dort vorteilhafterweise wiederum durch eine Verkrimpung 44 fixiert gehalten. Dadurch ist ein vorgegebener Abstand zwischen der Montagehülse 32 und dem Führungsabschnitt 36 gegeben. Aufgrund des eingespannten Kraftspeicherelementes 41 sind der Führungsabschnitt 36 und die Montagehülse 32 in einem definierten Abstand zueinander ausgerichtet.

An der Montagehülse 32 kann des Weiteren eine Erfassungseinrichtung 47 vorgesehen sein. Diese Erfassungseinrichtung 47 ermöglicht die Bestimmung einer Position des zweiten Führungselementes 38 innerhalb der Montagehülse 32. Dadurch kann eine Position des Dichtkonus 28 zur Ventilsitzfläche 27 erfasst werden. Die Erfassungseinrichtung 47 kann die erfassten Signale an die Steuerung 19 zur Weiterverarbeitung bzw. zur Ansteuerung des Ventils 11 übertragen.

Beispielsweise kann durch die Steuerung 19 ein Steuersignal ausgegeben werden, indem ein elektrischer Strom zwischen 0 bis 2A ausgegeben wird. Die Größe des Steuersignals hängt ab von einem anzusteuernden Öffnungshub des Dichtkonus 28 gegenüber der Ventilsitzfläche 27, um die gewünschte Raumtemperatur zu erzielen. Dabei kann eine getaktete oder eine stufenlose Veränderung des Steuerstromes angesteuert werden. Eine Umgebungstemperatur, welche zur Ansteuerung einer Fußbodenheizung oder eines Heizkörpers erfasst wird, kann über ein zwei- oder dreidimensionales Kennfeld ermittelt werden. Eine Antriebsleistung für ein solches Ventil 11 ist bevorzugt gleich oder kleiner als 2 W, insbesondere 1 W.

Das Stellelement 43 ist beispielsweise als ein Drahtelement ausgebildet. Insbesondere ist das Stellelement 43 als ein geradlinig ausgebildetes Drahtelement vorgesehen, welches um die Umlenkung 42 umlenkbar ist. Bei dem Stellelement 43 handelt es sich um einen Draht aus einer Formgedächtnislegierung, der sich in Abhängigkeit des elektrischen Stromes in seiner Länge ändert. Bei einer Nichtbestromung ist das Stellelement 43 in einer Ausgangslänge. Mit zunehmender Bestromung verkürzt sich das Stellelement 43. Vorteilhafterweise kann vorgesehen sein, dass das Stellelement 43 von einer Hülse umgeben ist. Hierbei kann es sich um eine Kunststoffhülse oder eine Teflonhülse handeln. Diese Hülse kann sich nur über den Bereich der Umlenkung 42 erstrecken, sodass zwischen der Umlenkung 42 und dem Stellelement 43 eine verringerte Reibung gegeben ist. Auch kann sich die Hülse vollständig von der einen Verkrimpung 44 über die Umlenkung 42 bis zur anderen Verkrimpung 44 erstrecken. Dadurch ist das Stellelement 43 vollständig umgeben und geschützt.

Die Baugruppe 31 umfasst des Weiteren ein Ventilelement 29. Dieses Ventilelement 29 umfasst gemäß der Ausführungsform in Figur 3 und 4 einen Ventilkörper 49. Der Ventilkörper 49 kann sich an den Führungsabschnitt 36 anschließen. Der Ventilkörper 49 und der Führungsabschnitt 36 können auch zu einem Teil integriert sein. Vorzugsweise umfasst der Ventilkörper 49 das erste Führungselement 37. Das Ventilelement 29 umfasst eine an dem Ventilkörper 49 angeordnete Ventilnadel 51. Diese Ventilnadel 51 ist entgegengesetzt zum Führungsabschnitt 36 ausgerichtet. An einem freien stirnseitigen Ende der Ventilnadel 51 ist ein Aufnahmeabschnitt 52 vorgesehen, an welchem der Dichtkonus 28 befestigbar ist. Bei dieser Ausführungsform ist das Ventilelement 29 zweiteilig ausgebildet. Der Ventilkörper 49 und die Ventilnadel 51 sind bevorzugt einteilig ausgebildet und der Dichtkonus 28 ist daran befestigbar. Auch kann die Ventilnadel 51 als separates Teil an dem Ventilkörper 49 befestigbar sein.

Das Ventilgehäuse 12 gemäß Figur 2 ist bevorzugt einteilig ausgebildet. Hierbei handelt es sich beispielsweise um ein Spritzgussgehäuse aus Kunststoff. Auch kann dieses aus einem Metall oder dergleichen ausgebildet sein. Sowohl der medienseitige Gehäuseabschnitt 14 als auch der umgebungsseitige Gehäuseabschnitt 16 sind aus einem Teil gebildet. Auch die Schnittstelle 18 ist einteilig mit den Gehäuseabschnitten 14, 16 ausgebildet. Alternativ kann vorgesehen sein, dass die Schnittstelle 18 vor oder nach dem Einsetzen der Baugruppe 31 in den umgebungsseitigen Gehäuseabschnitt 16 in das Ventilgehäuse 12 eingesetzt wird. Dies kann sowohl über eine stirnseitige Öffnung an dem umgebungsseitige Gehäuseabschnitt 16 erfolgen als auch über die Auslassöffnung 43 des medienseitige Gehäuseabschnitts 14.

In der Schnittstelle 18 ist eine Öffnung 54 vorgesehen. Die Baugruppe 31 wird in den umgebungsseitigen Gehäuseabschnitt 16 eingesetzt. Die Baugruppe 31 kann in der eingesetzten Position zu dem umgebungsseitigen Gehäuseabschnitt 16 durch ein Sicherungselement 58 gegen Lösen gesichert sein. Dabei wird die Ventilnadel 51 durch die Öffnung 54 hindurchgeführt, sodass die Ventilnadel 51 in dem Regulierraum 24 des medienseitigen Gehäuseabschnitts 14 positioniert ist. Im Anschluss daran wird ein Dichtelement 53 zur Schnittstelle 18 positioniert. Bei diesem Dichtelement 53 handelt es sich bevorzugt um einen Wellendichtring. Das Dichtelement 53 umfasst bevorzugt eine umlaufende Vertiefung, insbesondere V-förmige Vertiefung, welche zum Regulierraum 24 offen ausgerichtet ist. Durch den anstehenden Druck des Mediums im Regulierraum 24 wird der an die Vertiefung angrenzende Innenabschnitt und Außenabschnitt des Dichtelementes 53 aufgeweitet. Dadurch wird eine abdichtende Anlage des Dichtelementes 53 sowohl zur Schnittstelle 18 als auch zur Ventilnadel 51 erzielt. Das Dichtelement 53 wird durch ein Befestigungselement, insbesondere einen Sicherungsring, zur Schnittstelle 18 fixiert gehalten. Ein Außenumfang der Ventilnadel 51 wird mediendicht innerhalb des Dichtelementes 53 auf und ab bewegbar geführt.

Darauffolgend wird der Dichtkonus 28 an dem Anschlussabschnitt 52 der Ventilnadel 51 positioniert. Der Dichtkonus 28 wird durch die Ausgangsöffnung eingesetzt. Vorteilhafterweise wird der Dichtkonus 28 durch ein Befestigungselement, insbesondere eine Sicherungsscheibe, in einer definierten Position zur Ventilnadel 51 fixiert. Hierfür ist bevorzugt eine Schulter an der Ventilnadel 51 vorgesehen, welche in den Anschlussabschnitt 52 übergeht. Darauffolgend wird bevorzugt die Dichthülse 26 über die Auslassöffnung 23 in den Regulierraum 24 eingesetzt. Auch diese Dichthülse 26 kann durch ein Befestigungselement insbesondere einen Sicherungsring, in der Auslassöffnung 23 fixiert gehalten werden. Auch kann eine Einpressung oder ähnliches vorgesehen sein.

Eine alternative Ausführungsform zu dem Ventil 11 gemäß Figur 2 kann darin bestehen, dass zwischen der Ventilnadel 51 und dem Ventilkörper 49 eine Trennstelle gebildet ist. Bei dieser alternativen Ausführungsform kann vorgesehen sein, dass eine modifizierte Baugruppe 31 ausgebildet ist, welche analog zu den Figuren 3 und 4 aufgebaut ist mit der Ausnahme, dass an den Ventilkörper 49 keine Ventilnadel 51 vorgesehen ist. Die Ventilnadel 51 mit einem an dem Aufnahmeabschnitt 52 angeordneten Dichtkonus 28 wird in den medienseitigen Gehäuseabschnitt 14 eingesetzt und darauffolgend durch die Dichthülse 26 fixiert. Ein dem Dichtkonus 28 gegenüberliegendes Ende der Ventilnadel 51 ragt durch die Durchbrechung 54 der Schnittstelle 18 hindurch in einen Innenraum des umgebungsseitigen Gehäuses 16. In diesen Innenraum kann diese modifizierte Baugruppe 31 eingesetzt werden. Nach dem Positionieren des Ventilkörpers 49 zu der Ventilnadel 51 können diese fest miteinander verbunden werden. Im Anschluss daran ergibt sich ein Aufbau in Analogie zu Figur 2, mit dem Unterschied, dass der Ventilkörper 49 und die Ventilnadel 51 zweiteilig ausgebildet, jedoch fest zueinander angeordnet sind.

Die Baugruppe 31 ist bevorzugt mit einer Sicherungsfunktion ausgebildet. Hierbei handelt es sich um eine sogenannte Failsafe-Funktion. Sollte das Stellelement 43 brechen oder bei einem Stromausfall nicht mehr angesteuert werden, wird das Ventilelement 29 durch das Kraftspeicherelement 41 beaufschlagt und in eine Schließposition zum Ventilsitz 25 übergeführt. Dadurch ist der Durchgang 21 geschlossen und somit ein Durchströmen des Mediums gesperrt.

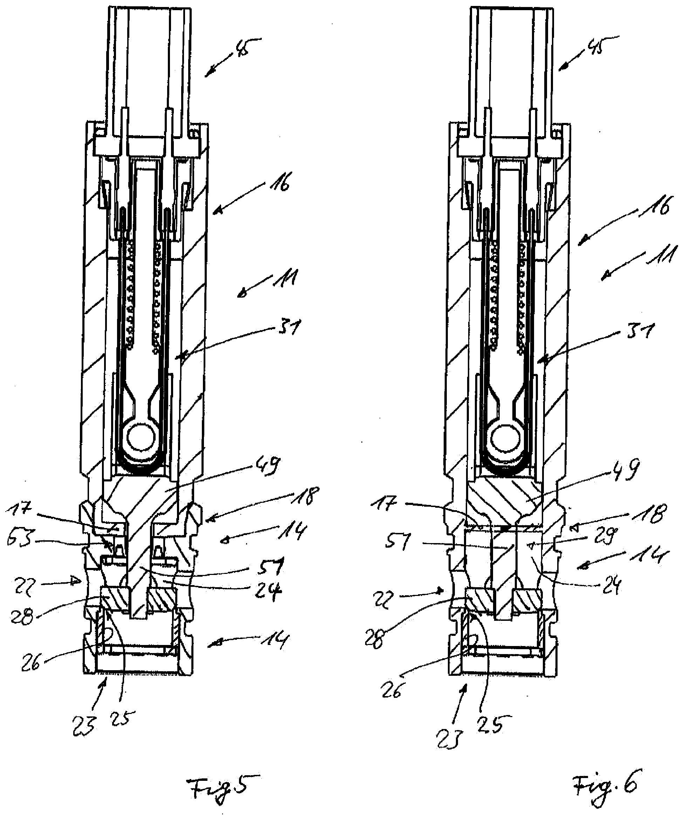

In Figur 5 ist eine schematische Schnittansicht des Ventils 11 gemäß einer alternativen Ausführungsform zu Figur 2 dargestellt. Diese Ausführungsform gemäß Figur 5 weicht nur im Aufbau des Ventilgehäuses 12 ab. Bei dieser Ausführungsform ist vorgesehen, dass der medienseitige Gehäuseabschnitt 14 und der umgebungsseitige Gehäuseabschnitt 16 als zwei getrennte Bauteile ausgebildet sind. Beispielsweise ist an dem umgebungsseitigen Gehäuseabschnitt 16 die Schnittstelle 18 angeordnet. Der medienseitige Gehäuseabschnitt 14 umfasst eine solche Schnittstelle 18 nicht. Die beiden Gehäuseabschnitte 14, 16 können ineinander gesteckt werden, um darauffolgend eine unlösbare Verbindung zwischen den beiden Gehäuseabschnitten 14, 16 herzustellen. In Abhängigkeit des Materials für das Ventilgehäuse 12 kann dies durch eine Verklebung, Verschweißung oder Lötung erfolgen. Alternativ können diese beiden Gehäuseabschnitte 14, 16 auch miteinander verschraubt oder verrastet werden. Es versteht sich, dass die Schnittstelle 18 auch an dem medienseitigen Gehäuseabschnitt 14 oder an beiden Gehäuseabschnitten 14, 16 vorgesehen sein kann. Auch ist möglich, dass die Schnittstelle 18 als ein separates Bauteil ausgebildet ist, welches vor dem Verbinden des medienseitigen Gehäuseabschnitts 14 und des umgebungsseitigen Gehäuseabschnitts 16 dazwischenliegend positioniert und fixiert oder eingespannt wird.

In Figur 6 ist eine weitere alternative Ausführungsform des Ventilgehäuses 12 von dem Ventil 11 gemäß Figur 2 dargestellt. Aufgrund der abweichenden Ausführungsform des Ventilgehäuses 12 ist auch eine abweichende Ausführungsform des Ventilelementes 29 gegeben.

Bei dieser Ausführungsform ist vorgesehen, dass die Schnittstelle 18 als eine Membran, insbesondere durchgehende Membran, ausgebildet ist. Diese Membran kann einteilig an einem der beiden verbindbaren Gehäuseabschnitte 14, 16 oder mit dem Ventilgehäuse einteilig ausgebildet sein. Alternativ kann diese durchgehende Membran als Schnittstelle 18 auch zwischen zwei separaten Gehäuseabschnitten 14, 16 eingespannt sein. Dadurch wird wiederum eine mediendichte Trennung zwischen dem medienseitigen Gehäuseabschnitt 14 und dem umgebungsseitigen Gehäuseabschnitt 16 geschaffen.

Aufgrund dieser durchgehenden Membran ist der Ventilkörper 49 ohne Ventilnadel 51 ausgebildet. Vielmehr weist der Ventilkörper 49 eine zur Membran weisende Anlagefläche auf, um eine Auslenkbewegung der Membran anzusteuern. Dem Ventilkörper 49 gegenüberliegend und an der anderen Seite der Membran anliegend ist die Ventilnadel 51 vorgesehen. Diese nimmt an dem Anschlussabschnitt 52 wiederum den Dichtkonus 28 auf. Diese Anordnung weist den Vorteil auf, dass kein zusätzliches Dichtelement erforderlich ist. Die als Membran ausgebildete Schnittstelle 18 ist derart elastisch, dass diese eine Hubbewegung des Ventilelementes 29 zum Öffnen und Schließen des Durchgangs 21 ermöglicht. Der Ventilkörper 49 und die Ventilnadel 51 können auch über eine Durchbrechung 56 in der Membran miteinander verbunden sein, wobei nach dem Verbinden von dem Ventilkörper 49 mit der Ventilnadel 51 die Durchbrechung 56 in der Membran wiederum mediendicht verschlossen ist.

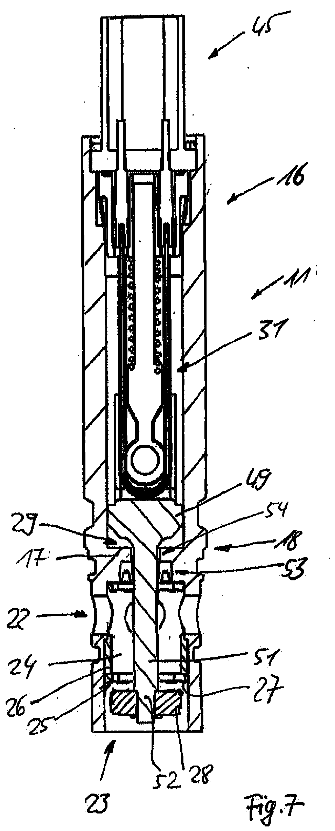

In Figur 7 ist eine alternative Ausführungsform des Ventils 11 zu den Figuren 1 bis 6 dargestellt. Das Ventil 11 gemäß den Figuren 1 bis 6 ist als ein NC-Ventil ausgebildet. Das Ventil 11 gemäß Figur 7 ist als ein NO-Ventil (normally-open) ausgebildet. Bei diesem Ventil 11 ist vorgesehen, dass dieses in einer Ausgangsposition geöffnet ist und bei einer Bestromung des Stellelementes 43 in eine Schließposition überführbar ist.

Im Hinblick auf den Aufbau und die Funktion wird vollumfänglich auf die Figuren 2 bis 6 Bezug genommen werden. Abweichend beim NO-Ventil 11 gemäß der Figur 7 ist, dass sich die Ventilnadel 51 durch die Dichthülse 26 hindurch erstreckt. Der an der Ventilnadel 51 angeordnete Dichtkonus 28 ist zwischen der Auslassöffnung 23 des medienseitigen Gehäuses 14 und der Dichthülse 26 positioniert. Dabei ist der Dichtkonus 28 in einer Ausgangsposition des Ventils 11 derart positioniert, dass dieser gegenüber einer gegenüberliegenden, an der Dichthülse 26 vorgesehenen Ventilsitzfläche 27 abgehoben ist. Dadurch ist der Durchgang 21 zwischen der Auslassöffnung 23 und der Einlassöffnung 22 geöffnet.

Sobald das Stellelement 43 der Baugruppe 31 bestromt wird, erfolgt eine Schließbewegung des Ventilelementes 29. Der Dichtkonus 28 wird zur Anlage an der Ventilsitzfläche 27 übergeführt und der Durchgang 21 geschlossen.

Alle weiteren alternativen Ausführungsformen bezüglich dem ein- oder zweiteiligen Ventilgehäuse und/oder der einteilig daran angeordneten Schnittstelle und/oder Membran, oder der darin einsetzbaren Schnittstelle und/oder Membran können auch bei dieser Ausführungsform vorgesehen sein.

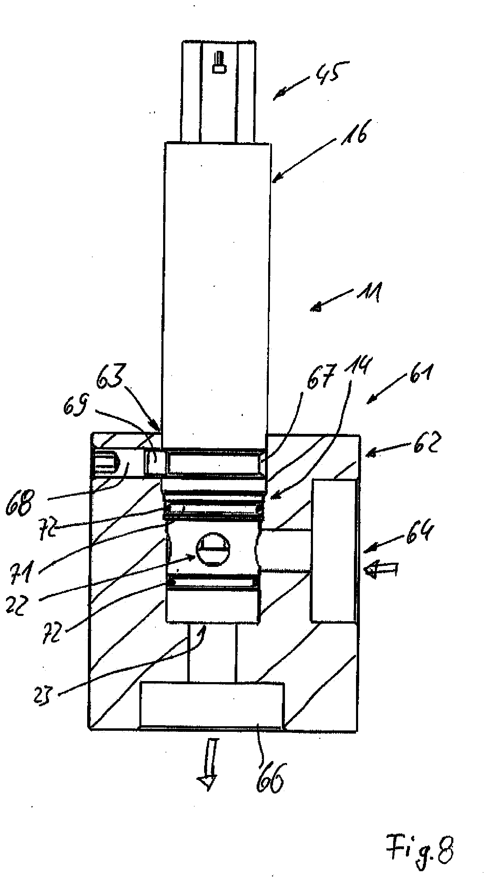

In Figur 8 ist eine Ventilanordnung 61 dargestellt. Diese Ventilanordnung 61 umfasst ein Ventil 11 nach einem der vorbeschriebenen Ausführungsformen. Des Weiteren umfasst diese Ventilanordnung 61 ein Anschlussgehäuse 62 mit einer Anschlussöffnung 63, in welche der medienseitige Gehäuseabschnitt 14 des Ventils 11 einsetzbar ist. Die Anschlussöffnung 63 ist mit einem Einlass 64 sowie mit einem Auslass 66 verbunden. Der medienseitige Gehäuseabschnitt 14 des Ventils 11 ist nach dem Einsetzen in die Anschlussöffnung 63 dazwischenliegend positioniert. Zur abgedichteten Positionierung des medienseitigen Gehäuseabschnitts 14 weist dieser oberhalb und unterhalb der Einlassöffnung 22 eine umlaufende Vertiefung 71 auf, in welcher eine Dichtung 72, insbesondere ein Dichtring, positioniert ist. Das Ventil 11 ist mit einem Befestigungselement 68 in der Anschlussöffnung 63 fixiert. Dieses Befestigungselement 68 weist ein stirnseitiges Ende 69 auf, welches in eine umlaufende Nut an dem Ventilgehäuse 12, insbesondere dem umgebungsseitigen Gehäuseabschnitt 16 eingreift. Dies ermöglicht, dass das Ventil 12 nur in die Anschlussöffnung 63 einzusetzen ist, ohne dass es einer radialen Ausrichtung zum Einlass 64 und/oder Auslass 66 bedarf. Durch das Befestigungselement 68 erfolgt eine axiale Sicherung des Ventils 12 zur Anschlussöffnung 63.

Das Anschlussgehäuse 62 kann beispielsweise ein Ventilblock einer Fußbodenheizung sein. Vorteilhafterweise sind mehrere Anschlussöffnungen 63 in dem Anschlussgehäuse 62 nebeneinanderliegend vorgesehen, um mehrere Heizkreisläufe einer Fußbodenheizung, insbesondere für eine Etage, anzusteuern.

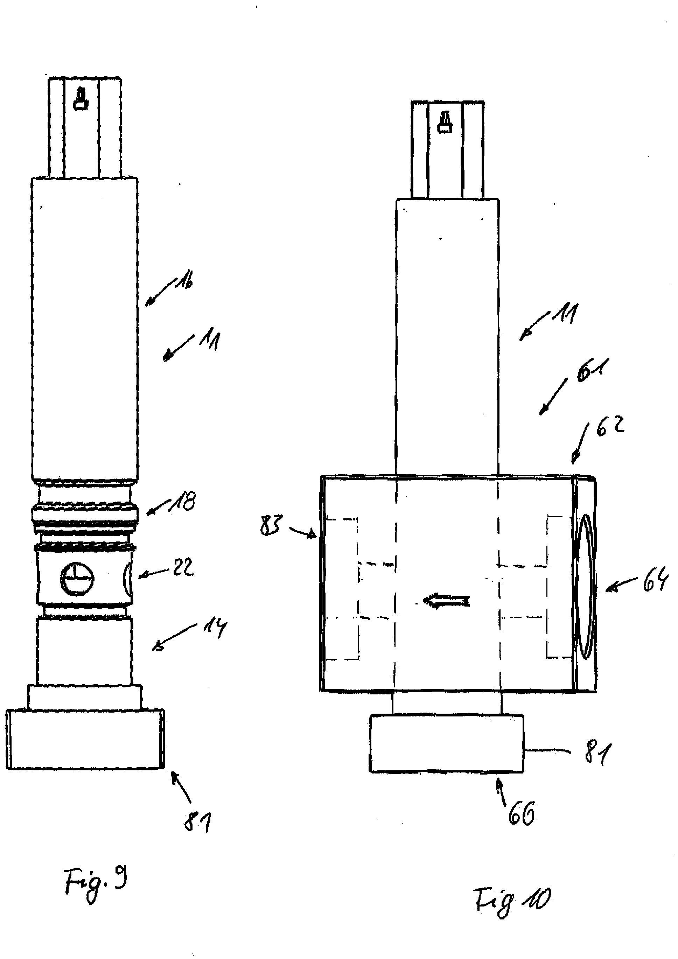

In Figur 9 ist eine weitere alternative Ausführungsform des Ventils 11 zu den Figuren 1 bis 7 dargestellt. Bei dieser Ausführungsform ist vorgesehen, dass an einem unteren Ende oder einem stirnseitigen Ende des medienseitigen Gehäuseabschnitts 14 ein Befestigungsabschnitt 81 vorgesehen ist. Dieser Befestigungsabschnitt 81 kann gemäß einer ersten Ausführungsform als ein Gewinde ausgebildet sein, insbesondere als ein Außengewinde. Dadurch wird ermöglicht, dass ein Schlauch mit einer Schraubverbindung mit dem Befestigungsabschnitt 81 verbindbar ist. Dieser Befestigungsabschnitt 81 kann einteilig, insbesondere bei einem aus Kunststoff hergestellten Ventilgehäuse 12, mit dem medienseitigen Gehäuseabschnitt 14 ausgebildet sein. Auch kann dieser Befestigungsabschnitt 81 durch eine lösbare Verbindung an dem medienseitigen Gehäuseabschnitt 14 angeordnet sein.

Ein solches Ventil 11 ist bevorzugt als eine Einsteckpatrone ausgebildet. Die Einsteckpatrone kann in ein Anschlussgehäuse 62 zur Bildung einer Ventilanordnung 61 einsteckbar sein, wie dies beispielsweise in Figur 10 dargestellt ist. Dieses Anschlussgehäuse 62 umfasst eine Anschlussöffnung 63, die zusammen mit dem Auslass 66 eine Einstecköffnung bildet. Dadurch kann das Ventil 11 gemäß Figur 9 von unten in das Anschlussgehäuse 62 eingesteckt werden. Die Sicherung der Einsteckpatrone in dem Anschlussgehäuse 62 kann beispielsweise durch das Befestigungselement 68 erfolgen wie dies in Figur 8 beschrieben ist.

Das Anschlussgehäuse 62 umfasst dem Einlass 64 gegenüberliegend einen Durchlass 83. Der Durchlass 83 ist ebenfalls mit der Anschlussöffnung 63 verbunden. Dadurch ist das Anschlussgehäuse 62 als ein Einzelmodul ausgebildet. Dies ermöglicht, dass mehrere Anschlussgehäuse 62 aneinandergereiht bzw. in Reihe miteinander verbunden werden.

Eine solche Ventilanordnung 61 mit dem Anschlussgehäuse 62 gemäß Figur 10 weist den Vorteil auf, dass ein durch den Einlass 64 zur geführtes Medium bei einem Ventilelement 29 in einer Schließposition den Regulierraum 24 durchströmt und dem Durchlass 83 zugeführt wird. Sofern das Ventilelement 29 in einer Öffnungsposition übergeführt ist, kann das dem Einlass 64 zugeführte Medium sowohl über den Auslass 66 abströmen als auch in den Durchlass 83 gelangen.

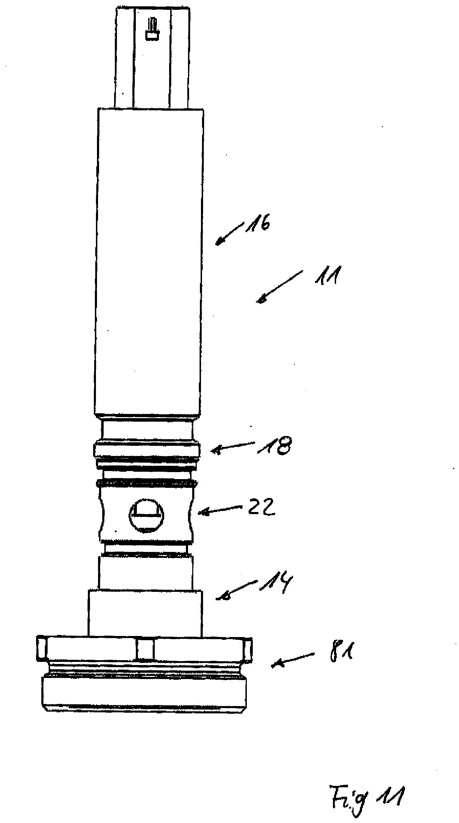

In Figur 11 ist eine alternative Ausführungsform des Ventils 11 zu Figur 9 dargestellt. Bei dieser Ausführungsform ist vorgesehen, dass anstelle dem als Gewinde ausgebildeten Befestigungsabschnitt 81 eine Überwurfmutter an einem nicht näher dargestellten Halteabschnitt vorgesehen ist. Dieser Halteabschnitt ist bevorzugt einteilig mit dem stirnseitigen Ende des medienseitigen Gehäuseabschnitts 14 verbunden.

Die alternativen Ausführungsformen des Ventils 11 gemäß Figur 9 und 11 können alle vorbeschriebenen Ausführungsformen des Ventils 11 gemäß den Figuren 1 bis 7 umfassen.

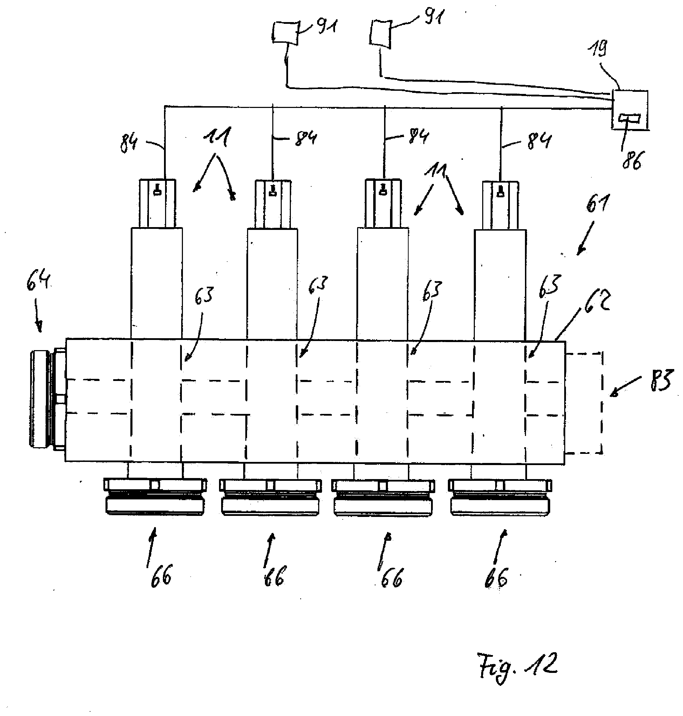

In Figur 12 ist eine alternative Ausführungsform der Ventilanordnung 61 zu Figur 10 dargestellt. Das Anschlussgehäuse 62 umfasst einen Einlass 64 sowie einen Durchlass 83, wobei dazwischenliegend mehrere in Reihe zueinander ausgerichtete Einstecköffnungen vorgesehen sind. Diese Einstecköffnungen sind durch jeweils eine Anschlussöffnung 64 und einen Auslass 66 gebildet. Dieses Anschlussgehäuse 62 kann als Verteilergehäuse für eine Fußbodenheizung einsetzbar sein. Das dem Einlass 64 zugeführte Medium kann in Abhängigkeit der Ansteuerung des jeweiligen Ventils 11 dem jeweiligen Auslass 66 zugeführt werden. Gleichzeitig kann das Medium die jeweiligen Regulierräume 24 durchströmen und bis zum Durchlass 83 gelangen.

Die in dem Anschlussgehäuse 62 angeordneten Ventile 11 können über jeweils eine Steuerleitung 84 mit der Steuerung 19 verbunden sein. Alternativ kann auch eine kabellose Ansteuerung erfolgen. Auch können die Ventile 11 in Reihe geschalten und mit der Steuerung 19 verbunden sein. Dadurch wird eine individuelle Ansteuerung des jeweiligen Ventils 11 ermöglicht. Somit kann beispielsweise jeder Heizkreis separat angesteuert werden.

Bevorzugt ist vorgesehen, dass die Steuerung 19 eine Steuerplatine 86 umfasst, durch welche die in dem Anschlussgehäuse 62 der Ventilanordnung 61 angeordneten Ventile 11 jeweils separat ansteuerbar sind.

Die Steuerung 19, insbesondere die Steuerplatine 86, verarbeitet Eingangssignale von zumindest einer Regeleinrichtung 91. Diese Regeleinrichtung 91 kann beispielsweise ein Raumtemperaturregler sein. Durch das anzusteuernde Ventil 11 kann der Kreislauf in den Bereich oder Raum, in dem die Regeleinrichtung 91 positioniert ist, angesteuert werden.

Die Steuersignale der Regeleinrichtung 91 können über Steuerleitungen und/oder Kabel bis an die Steuerung 19 übertragen werden.

Diese Steuerplatine 68 umfasst zumindest einen Spannungswandler, sodass eine Eingangsspannung, welche von einem Sensor oder einem Raumthermostat als Steuersignal übermittelt wird, auf eine Steuerspannung reduziert wird. Oftmals umfasst die Eingangsspannung 230 V oder 24 V. Als Steuerspannung ist bevorzugt weniger als 5 V oder 2 V gesehen. Bevorzugt werden die Ventile 11 aufeinanderfolgend in einer vorbestimmten Reihenfolge angesteuert. Dabei kann auch die jeweilige Taktzeit zum Öffnen und Schließen des Ventils 11 angesteuert werden. Vorteilhafterweise ist vorgesehen, dass eines der Ventile 11 mit der Steuerspannung zum Öffnen beaufschlagt wird. Die weiteren Ventile bleiben geschlossen. Nach einer vorbestimmten Taktzeit wird dieses geöffnete Ventil 11 geschlossen und das nachfolgende Ventil 11 zum Öffnen angesteuert. Dadurch wird ermöglicht, dass immer nur eines der Ventile 11 mit einer Steuerspannung beaufschlagt wird. Aufgrund des Stellelementes 43 in der Baugruppe 31 des Ventils 11 erfolgt eine verzögerte Schließbewegung des Ventils 11 nachdem die Steuerspannung auf Null reduziert ist. Das nachfolgend angesteuerte Ventil 11 ist bereits in eine Öffnungsposition übergeführt. Aufgrund der Trägheit des angesteuerten Ventils 11, insbesondere auch aufgrund der Trägheit von Heizkreisläufen, kann durch die aufeinanderfolgende Ansteuerung der Ventile 11 eine Energiereduzierung oder Energieminimierung erzielt werden, ohne dass es zu Nachteilen während der Heizphase oder der Temperierphase kommt.

Alternativ kann vorgesehen sein, dass die Ventile 11 jeweils die vorbeschriebene Steuerplatine 86 umfassen. In diesem Fall können die Steuerplatinen 86, insbesondere über die Steuereinrichtung 19, miteinander kommunizieren. Dadurch kann der vorbeschriebene Vorteil der Energiereduzierung insbesondere Energieminimierung, ebenso erzielt werden.

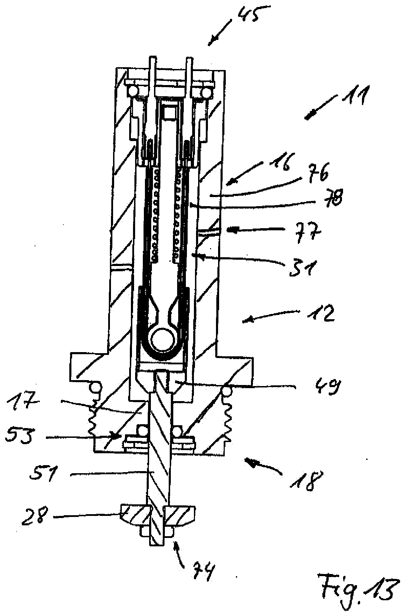

In Figur 13 ist eine alternative Ausführungsform des Ventils 11 zu der Ausführungsform gemäß Figur 5 in einer Schnittansicht dargestellt. Das Ventil 11 gemäß Figur 13 umfasst abweichend zu der Ausführungsform gemäß Figur 5 nur einen umgebungsseitigen Gehäuseabschnitt 16. Das Ventil 11 ist somit frei von einem medienseitigen Gehäuseabschnitt 14 ausgebildet. An einem stirnseitigen Endbereich des Gehäuseabschnitt 16 kann eine Nut 67 vorgesehen sein, um das Ventilgehäuse 12 des Ventils 11 beispielsweise gemäß Figur 8 in dem Anschlussabschnitt 52 des Anschlussgehäuses 62 zu fixieren. Alternativ kann am stirnseitigen Bereich des umgebungsseitigen Gehäuseabschnitts 16 auch ein Gewinde oder ein sonstiges Befestigungselement vorgesehen sein, um das Ventil 11 in der Anschlussöffnung 63 des Anschlussgehäuses 62 zu fixieren.

Der Dichtkonus 28 wird nach dem Einsetzen der Baugruppe 31 in den umgebungsseitigen Gehäuseabschnitt 16 auf die Ventilnadel 51 aufgesetzt und durch eine lösbare oder unlösbare Verbindung 74, beispielsweise durch eine Clipsverbindung oder Rastverbindung, zu der Ventilnadel 51 befestigt. Alternativ kann der Dichtkonus 28 auch aufgeschraubt oder aufgepresst werden. Weitere Arten der Befestigung sind ebenfalls möglich.

Bei dieser Ausführungsform des Ventils 11 gemäß Figur 13 umfasst der umgebungsseitige Gehäuseabschnitt 16 beispielsweise zumindest eine Durchbrechung 77. Diese Durchbrechung 77 verbindet einen Innenraum 78 mit der Umgebung, die den umgebungsseitigen Gehäuseabschnitt 16 umgibt. Die Umgebung kann beispielsweise in einem Steuerschrank oder einem sonstigen geschlossenen als auch offenen Raum vorgesehen sein. Die Durchbrechung 77 erstreckt sich bevorzugt durch eine Wand 76 des Gehäuseabschnitts 16, welche den Innenraum 78 begrenzt. Die Durchbrechung 77 kann als Bohrung, als Langloch oder dergleichen ausgebildet sein. In die Durchbrechung 77 oder auf der Durchbrechung 77 kann ein Filterelement vorgesehen sein, um beispielsweise ein Eintreten von Staub oder sonstigen Verschmutzungen zu vermeiden. Durch die zumindest eine Durchbrechung 77 ist ermöglicht, die Abkühlzeit und/oder die Heizenergie für das zumindest eine Stellelement 43 zu beeinflussen und/oder zu optimieren. Beispielsweise kann durch die Einbringung von Durchbrechungen 77 eine Verkürzung der Abkühlzeit des zumindest einen Stellelementes 43 erzielt werden, da ein Austausch der Umgebungsluft mit der Luft im Innenraum 78 ermöglicht ist.

Die vorbeschriebene zumindest eine Durchbrechung 77 kann auch bei den vorbeschriebenen Ausführungsbeispielen vorgesehen sein.

Die vorbeschriebenen alternativen Ausführungsformen gelten auch für dieses Ventil 11 gemäß Figur 13.

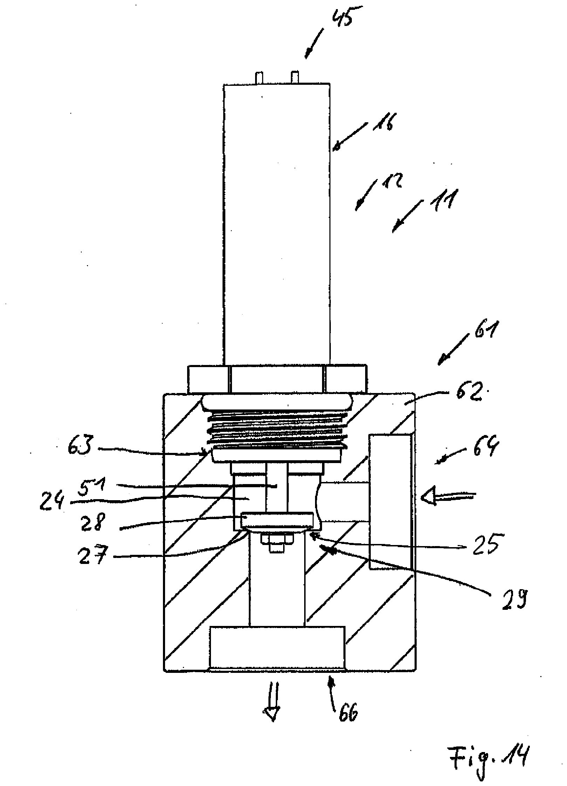

In Figur 14 ist eine schematische Ansicht einer alternativen Ausführungsform der Ventilanordnung 61 zu Figur 8 dargestellt. Diese Ventilanordnung 61 umfasst ein Ventil 11 gemäß Figur 13. In dem Anschlussgehäuse 62 ist die Anschlussöffnung 63 vorgesehen. In die Anschlussöffnung 63 mündet der Einlass 64. Von der Anschlussöffnung 63 aus erstreckt sich der Auslass 66 nach außen. Zwischen dem Einlass 64 und dem Auslass 66 ist ein Durchgang 21 gebildet, der als ein Regulierraum 24 wirkt. In dem Durchgang 21 ist eine Ventilsitzfläche 27 ausgebildet. Diese Ventilsitzfläche 27 ist beispielsweise dem Auslass 66 zugeordnet. Nach dem Einsetzen des Ventils 11 gemäß Figur 13 in die Anschlussöffnung 63 liegt der Dichtkonus 28 an der Ventilsitzfläche 27 in der Anschlussöffnung 63 des Anschlussgehäuses 62 an. Ein stirnseitiger Bereich des umgebungsseitigen Gehäuseabschnitts 16 ist mit dem Anschlussgehäuse 62 lösbar verbunden. Dies kann beispielsweise analog zu der Ausführungsform in Figur 8 sein. Bei dieser Ausführungsform der Ventilanordnung 61 gemäß Figur 14 ist somit im Vergleich zu Figur 8 ein medienseitiger Gehäuseabschnitt 14 nicht erforderlich.

## Patentansprüche

1. Verfahren zur Steuerung einer Ventilanordnung (61),
- bei welchem ein Anschlussgehäuse (62) vorgesehen ist, wobei das Anschlussgehäuse (62) mehrere Anschlussöffnungen (63) aufweist, oder aus mehreren Modulen mit jeweils zumindest einer Anschlussöffnung (63) gebildet ist, wobei die jeweilige Anschlussöffnung (63) sich zumindest zwischen einem Einlass (64) und zumindest einem Auslass (66) zumindest teilweise erstreckt,
- bei welchem in dem Anschlussgehäuse (62) zumindest zwei Ventile (11) angeordnet sind und jedes in der Anschlussöffnung (63) positionierte Ventil (11) für eine Öffnungs- und Schließbewegung mit einem Steuersignal von einer Steuerung (19) angesteuert wird,
**dadurch gekennzeichnet,**
- **dass** durch zumindest eine Steuerplatine (86) der Steuerung (19) eine Taktzeit des zumindest einen Ventils (11) für eine Öffnungs- und Schließbewegung der Ventile (11) angesteuert wird.

2. Verfahren nach Anspruch 1, **dadurch gekennzeichnet, dass** durch die zumindest eine Steuerplatine (86) eine Reihenfolge der Ventile (11) für eine Öffnungs- und Schließbewegung ausgewählt und angesteuert wird.

3. Verfahren nach einem der vorhergehenden Ansprüche, **dadurch gekennzeichnet, dass** jedes in der Anschlussöffnung (63) eingesetzte Ventil (11) codiert und die Zuordnung in der Steuerplatine (86) abgespeichert wird.

4. Verfahren nach einem der vorhergehenden Ansprüche, **dadurch gekennzeichnet, dass** durch die zumindest eine Steuerplatine (86) der Steuerung (19) eine Eingangsspannung von einer Regeleinrichtung (91) auf eine Steuerspannung des zumindest einen Ventils (11) reduziert wird.

5. Verfahren nach Anspruch 4, **dadurch gekennzeichnet, dass** durch einen auf der Steuerplatine (86) vorgesehenen Spannungswandler oder mit der Steuerplatine (86) gekoppelten Spannungswandler eine Eingangsspannung, vorzugsweise von 230 V oder 24 V auf 2V oder weniger, reduziert wird.

6. Verfahren nach Anspruch 4 oder 5, **dadurch gekennzeichnet, dass** jedes Ventil (11) durch eine mit der Steuerung (19) verbundene Steuerleitung (84) angesteuert wird, oder dass jedes Ventil (11) kabellos durch die Steuerung (19) angesteuert wird

7. Verfahren nach einem der Ansprüche 4 bis 6, **dadurch gekennzeichnet, dass** eine Ansteuerung der einzelnen Ventile (11) oder von Gruppen der Ventile (11) mit der Steuerspannung für die Öffnungs- und Schließbewegung derart angesteuert wird, dass immer nur ein Ventil (11) oder eine Gruppe von Ventilen (11) mit der Steuerspannung beaufschlagt wird und die angelegte Steuerspannung auf Null gesetzt wird, bevor das nachfolgende Ventil (11) und die nachfolgende Gruppe von Ventilen (11) mit der Steuerspannung für die Öffnungs- und Schließbewegung angesteuert wird.

8. Verfahren nach einem der Ansprüche 4 bis 7, **dadurch gekennzeichnet, dass** das Ventil (11) in einem Ventilgehäuse (12) ein Ventilelement (29) aufweist, welches mit zumindest einem Ventilkörper (49) in einem Gehäuseabschnitt (16) des Ventilgehäuses (12) geführt ist und zumindest ein Stellelement (43) aus einer Formgedächtnislegierung aufweist, welches durch die Steuerspannung mit einer Öffnungs- und Schließbewegung des Ventilelementes (29) angesteuert wird.

9. Ventilanordnung mit einem Anschlussgehäuse (62), wobei das Anschlussgehäuse (62) mehrere Anschlussöffnungen (63) aufweist, oder aus mehreren Modulen mit jeweils zumindest einer Anschlussöffnung (63) gebildet ist, wobei die jeweilige Anschlussöffnung (63) sich zumindest zwischen einem Einlass (64) und zumindest einem Auslass (66) zumindest teilweise erstreckt,
- bei welcher in dem Anschlussgehäuse (62) zumindest zwei Ventile (11) angeordnet sind und jedes in der Anschlussöffnung (63) positionierte Ventil (11) für eine Öffnungs- und Schließbewegung mit einem Steuersignal von einer Steuerung (19) angesteuerbar ist,
**dadurch gekennzeichnet,**
- **dass** durch zumindest eine Steuerplatine (86) der Steuerung (19) eine Taktzeit des zumindest einen Ventils (11) für eine Öffnungs- und Schließbewegung der Ventile (11) angesteuert ist.

10. Ventilanordnung nach Anspruch 9, **dadurch gekennzeichnet, dass** durch die zumindest eine Steuerplatine (86) eine Reihenfolge der Ventile (11) für eine Öffnungs- und Schließbewegung ausgewählt und angesteuerbar ist.

11. Ventilanordnung nach Anspruch 9 oder 10, **dadurch gekennzeichnet, dass** die Steuerplatine (86) einen Spannungswandler aufweist, oder mit einem Spannungswandler gekoppelt ist, und vorzugsweise eine Eingangsspannung an einer Regeleinrichtung (91) von 230 V oder 24 V auf 2V oder weniger reduzierbar ist.

12. Ventilanordnung nach einem der Ansprüche 9 bis 11, **dadurch gekennzeichnet, dass** das in die Anschlussöffnung (63) einsetzbare Ventil (11) ein Ventilgehäuse (12) mit einem Ventilelement (29) aufweist, wobei das Ventilelement (49) umfasst, der in dem Ventilgehäuse (12) geführt ist und das Ventilelement (29) mit zumindest einem Stellelement (43) aus einer Formgedächtnislegierung ausgebildet ist, welches durch eine Steuerspannung der Steuerung (19) für eine Öffnungs- und Schließbewegung ansteuerbar ist.

13. Ventilanordnung nach einem der Ansprüche 9 bis 12, **dadurch gekennzeichnet, dass** jedes Ventil (11) jeweils mit einer Steuerleitung (84) mit der Steuerplatine (86) der Steuerung (19) verbunden ist, oder dass jedes Ventil (11) kabellos durch die Steuerplatine (86) der Steuerung (19) ansteuerbar ist.

14. Ventilanordnung nach einem der Ansprüche 9 bis 13, **dadurch gekennzeichnet, dass** an einer Außenseite des Ventilgehäuses (12) des Ventils (11) eine umlaufende Nut (67) vorgesehen ist, in welche ein in das Anschlussgehäuse (62) einsetzbares Befestigungselement (68) eingereift und das Ventil (11) axial in der Anschlussöffnung (63) des Anschlussgehäuses (62) sichert, oder dass an dem medienseitigen Gehäuseabschnitt (14) ein Außengewinde vorgesehen ist, welches in ein Innengewinde in der Anschlussöffnung (63) einschraubbar ist.

15. Ventilanordnung nach einem der Ansprüche 9 bis 14, **dadurch gekennzeichnet, dass** das Anschlussgehäuse (62) einen Einlass (64), einen Auslass (66) und einen Durchlass (83) aufweist, die jeweils mit der Anschlussöffnung (63) verbunden sind, oder dass das Anschlussgehäuse (62) einen Einlass (64) und einen Durchlass (83) aufweist, wobei dazwischenliegend zumindest eine Anschlussöffnung (63) vorgesehen ist, welche als eine Einstecköffnung sich durch das Anschlussgehäuse (62) erstreckt.
